Europäisches Patentamt

European Patent Office

Office européen des brevets

(11) Numéro de publication: **0 255 046**
**A1**

## (12) DEMANDE DE BREVET EUROPEEN

(21) Numéro de dépôt: 87110679.5

(22) Date de dépôt: 23.07.87

(51) Int. Cl.4 **H04L 25/49**

(30) Priorité: 28.07.86 FR 8610925

(43) Date de publication de la demande:
03.02.88 Bulletin 88/05

(84) Etats contractants désignés:
**BE DE FR GB IT LU NL SE**

(71) Demandeur: **ALCATEL CIT**
**33, rue Emeriau**
**F-75015 Paris(FR)**

(72) Inventeur: **Jaffre, Pierre**
**Résidence Ker Lann 3 rue Jeanne d'Arc**
**F-22300 Lannion(FR)**
Inventeur: **Le Mouel, Bernard**
**Gouzabas Saint Quay Perros**
**F-22700 Perros Guirec(FR)**
Inventeur: **Robin, Jean-François**
**Route de Brest Plounevez Moedec**
**F-22810 Belle Isle en Terre(FR)**
Inventeur: **Thepaut, Pierre**
**5 rue de Kermaria**
**F-22300 Lannion(FR)**

(74) Mandataire: **Weinmiller, Jürgen et al**
**Lennéstrasse 9 Postfach 24**
**D-8133 Feldafing(DE)**

(54) **Système de transmission numérique synchrone sur cable.**

(57) Ce système de transmission numérique synchrone par câble (3) avec répéteurs intermédiaires (4, 5, 6) comporte un terminal d'émission (1) dans lequel les données sont soumises à un embrouillage et à un codage en ligne binaire-ternaire de type 6B4T et des répéteurs régénérateurs (4, 5, 6) et un terminal de réception (3) pourvus en réception de moyens de filtrage de mise en forme à réponse en cosinus conformes à ceux du codage à réponse partielle classe 1 type $n=2$ et de moyens logiques de décryptage des superpositions linéaires des symboles ternaires reçus résultant d'un tel filtrage de mise en forme, le terminal de réception (2) restituant les données à partir des symboles ternaires décryptés au moyen d'un décodage 6B4T et d'un désembrouillage compatibles avec le codage et l'embrouillage d'émission.

EP 0 255 046 A1

FIG.1

## Système de transmission numérique synchrone sur câble

La présente invention est relative aux transmissions numériques synchrones à des débits très élevés sur câbles avec répéteurs.

Dans ce genre de transmission on utilise habituellement en ligne un signal qui n'a pas de composantes continues ou basses fréquences, celles-ci n'étant, la plupart du temps, pas transmises par les répéteurs et réservées à la téléalimentation et à la télésurveillance, et qui est constitué d'une suite synchrone de symboles multivalents se succédant à une cadence dite rapidité de modulation et répondant aux critères établis par Nyquist pour une transmission sans interférence intersymboles. La suite synchrone des symboles multivalents résulte de la mise en forme, par un filtrage passe-bas conforme aux critères de Nyquist, de la suite synchrone de leurs niveaux qui est un signal sans composante continue ou basses fréquences résultant d'une opération dite de codage en ligne. La longueur maximale que l'on peut donner au pas de régénération, c'est-à-dire la distance parcourue par les symboles sur le câble au-delà de laquelle ils ne peuvent plus être fidèlement reconnus, dépend de l'affaiblissement kilométrique du câble qui est lui-même fonction de la rapidité de modulation.

Pour tenter d'augmenter la longueur du pas de régénération en conservant le même débit numérique ou d'augmenter le débit numérique en conservant le même pas de régénération, il faut lutter contre l'affaiblissement du câble et il existe à priori pour cela trois solutions, soit augmenter le niveau d'émission c'est-à-dire l'amplitude des symboles en sortie de chaque répéteur, soit diminuer la rapidité de modulation en augmentant le nombre de niveaux des symboles, soit tolérer une interférence contrôlée entre symboles.

La possibilité d'augmenter le niveau d'émission est en fait assez limitée car une augmentation du niveau d'émission s'accompagne d'un accroissement de la puissance dissipée dans les répéteurs et des phénomènes de non linéarité occasionnant de la diaphonie.

L'augmentation du nombre des niveaux des symboles par un codage en ligne multiniveaux entraîne une détérioration du rapport signal à bruit dont dépend le taux d'erreurs et surtout une augmentation de la complexité des répéteurs qui est liée au nombre de niveaux à régénérer, et des difficultés d'utilisation en raison de la sensibilité de ces codes, croissantes en fonction de leur nombre de niveaux, à la gigue et aux variations d'atténuation et de phase du câble. Dans la pratique on ne va pas au-delà de trois niveaux, les codes ternaires en ligne étant de loin les plus utilisés dans les systèmes de transmission numérique à grand débit sur câble avec répéteurs, et l'on cherche seulement à diminuer la rapidité de modulation en diminuant la redondance des codes en ligne binaire-ternaire utilisés tout en conservant une information de rythme minimale, une absence de composantes continue ou basses fréquences et une possibilité de contrôle d'erreur. Dans cette voie, il semble que l'on ne puisse guère aller au-delà du code en ligne 6B/4T qui dans l'exemple de liaison numérique décrit dans la revue Commutation et Transmission n° 2, 1984 p 47 à 66 permet d'atteindre un pas de régénération de 4,5 km sur un câble coaxial 2,6/9,5 pour un débit de 140 Mbit/s.

La tolérance d'une interférence contrôlée intersymbole est la technique de codage à réponse partielle décrite notamment dans le brevet américain n° 3.388.330.

Cette technique utilisée pour augmenter le débit d'une liaison consiste à modeler la bande passante du canal de transmission de manière que celui-ci ne réponde que partiellement pendant la durée d'un symbole et présente un certain effet de mémoire conduisant à des superpositions linéaires de symboles qu'il est possible de décrypter. Le codage à réponse partielle entraîne comme le codage en ligne multiniveaux une dégradation du rapport signal à bruit et exige un décryptage des superpositions linéaires de symboles à chaque répéteur mais il est moins sensible à la gigue et aux variations de phase du câble et n'augmente pas le nombre de niveaux du signal à régénérer.

Le code à réponse partielle n'est pas utilisé tel quel, car il est réputé multiplier les erreurs, le décryptage des superpositions linéaires des symboles reçus faisant intervenir les valeurs de symboles précédemment reçus. Il est systématiquement associé à un précodage décrit dans le brevet américaine n° 3.388.330 précité ainsi que dans le brevet américain n° 3.492.578, qui permet le décryptage des superpositions linéaires de symboles sans connaissance de symboles reçus antérieurement en faisant correspondre, à l'émission, le niveau résultant de la super position linéaire à celui des symboles à transmettre modulo N, N étant le nombre de niveaux possibles des symboles.

Le précodage qui est un traitement non linéaire a cependant l'inconvénient de modifier le spectre de fréquences de la suite des symboles émis et d'obliger à rechercher la suppression des composantes continue et basses fréquences par le codage à réponse partielle lui-même. Il impose de ce fait le choix d'un système à réponse partielle de classe 4 qui n'est pas le plus avantageux du point de vue de la sensibilité à la gigue et aux variations d'atténuation et de phase du câble.

0 255 046

La présente invention a pour but un système de transmission numérique synchrone sur câble avec répéteurs ayant un pas de régénération le plus élevé possible grâce à une combinaison des techniques de codage en ligne multiniveaux et des techniques de codage à réponse partielle.

Elle a pour objet un système de transmission numérique synchrone sur câble avec répéteurs, comportant un terminal d'émission avec un embrouilleur de données suivi d'un codeur en ligne binaire-ternaire de type 6B/4T délivrant en ligne une suite synchrone de symboles ternaires, des répéteurs intermédiaires équipés en réception de moyen de filtrage conformes à ceux du codage à réponse partielle classe 1 type n = 2 et de moyens de décryptage des superpositions linéaires de symboles résultant d'un tel filtrage, et un terminal de réception équipé en réception, comme les répéteurs intermédiaires, de moyens de filtrage conformes à ceux du codage à réponse partielle classe 1 type n = 2 et de moyens de décryptage des superpositions linéaires de symboles résultant d'un tel filtrage, et pourvu d'un décodeur binaire-ternaire de type 6B/4T compatible avec le codeur 6B/4T du terminal d'émission et d'un désembrouilleur compatible avec l'embrouilleur d'émission.

La combinaison de la technique du codage à réponse partielle classe 1 type n = 2 sans précodage à la technique de codage en ligne 6B/4T permet d'obtenir une amélioration surprenante des capacités de transmission. Appliquée au système de transmission à codage en ligne 6B/4T décrit dans l'article précité de la revue Commutation et transmission, elle permet de faire passer le pas de régénération de 4,5 km à plus de 6,3 km tout en conservant le même câble, le même débit et la même marge de bruit.

D'autres caractéristiques et avantages de l'invention ressortiront de la description ci-après d'un mode de réalisation donné à titre d'exemple. Cette description sera faite en regard du dessin dans lequel :

-La figure 1 représente le schéma général d'un système de transmission selon l'invention,

-La figure 2 représente le synoptique du terminal d'émission du système de transmission représenté à la figure précédente,

-La figure 3 représente le synoptique d'un répéteur régénérateur du système de transmission représenté à la figure 1,

-La figure 4 détaille le schéma d'un circuit logique de décryptage de superposition employé dans un répéteur régénérateur représenté à la figure précédente et

-les figures 5 et 6 représentent le synoptique d'un terminal de réception du système de transmission représenté à la figure 1.

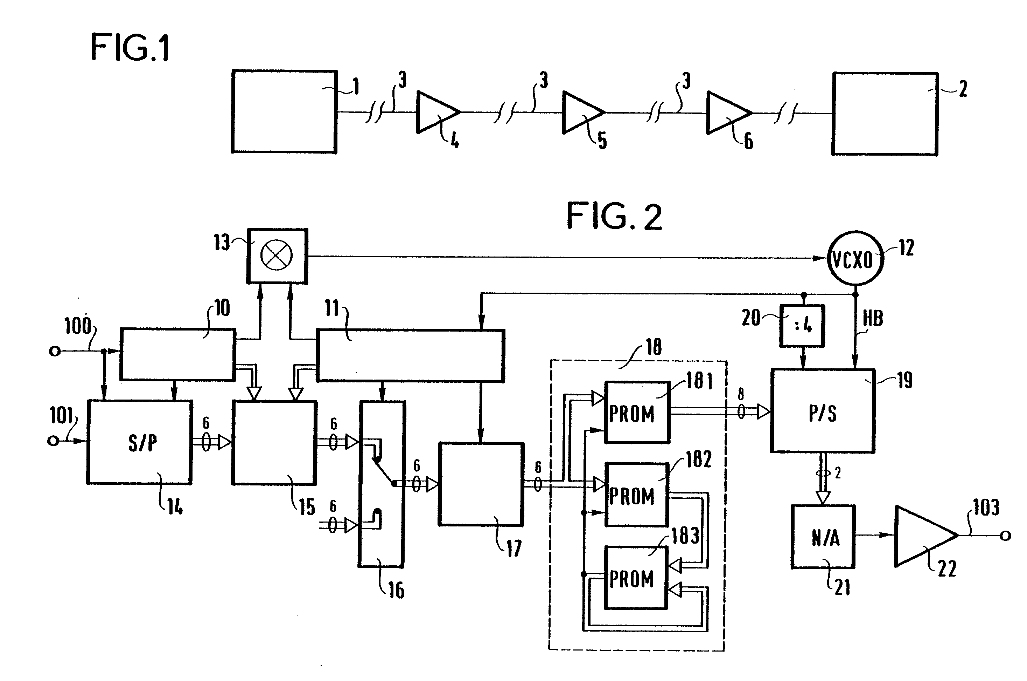

La figure 1 représente le schéma général du système de transmission qui va être décrit, avec un terminal d'émission 1 et un terminal de réception 2 reliés entre eux par un câble de transmission 3 équipé de répéteurs intermédiaires 4, 5, 6.

Le terminal d'émission a pour fonction essentielle de transformer les données à transmettre en une suite synchrone de symboles adaptés aux caractéristiques de transmission du câble 3, c'est-à-dire avec une rapidité de modulation aussi faible que possible tout en gardant une certaine redondance pour la détection des erreurs, avec un spectre de fréquences limité en haute fréquence et dépourvu de composantes continue ou basses fréquences et avec une information de rythme suffisante pour permettre une synchronisation automatique des équipements côté réception. Il reçoit les données à transmettre sous forme d'une suite synchrone d'éléments binaires que l'on supposera être à 140 Mbit/s pour la suite des explications et de son signal d'horloge locale associé et délivre en ligne un signal à 93,9 Mbaud/s résultant d'un embrouillage et d'un codage 6B/4T des données à transmettre ainsi que de l'introduction d'une trame de ligne permettant la synchronisation de l'embrouillage ce qui évite les problèmes de blocage et de multiplication d'erreurs au niveau de l'embrouilleur et l'introduction de voies de service donnant des facilités d'exploitation.

Le terminal d'émission a son synoptique représenté à la figure 2. Il comporte deux bases de temps 10 et 11 délivrant les divers rythmes nécessaires à la mise en forme des signaux. La première base de temps 10 est pilotée par le signal d'horloge locale qui est associé à la suite synchrone d'éléments binaires à 140 Mbit/s à transmettre et disponible sur une entrée 100. La deuxième base de temps 11 est pilotée par un oscillateur VCXO à commande en tension 12 délivrant un signal d'horloge HB à la fréquence Baud de 93,9 MHz. Les deux bases de temps 10 et 11 délivrent par division de fréquence et sélection de cycles deux sous harmoniques de même fréquence appliqués à un comparateur de phase 13 utilisé pour asservir la fréquence de l'oscillateur 12 et maintenir cette dernière dans un rapport constant avec la fréquence du signal d'horloge locale disponible sur l'entrée 100.

En entrée du terminal d'émission, on trouve un convertisseur série-parallèle 14 qui est piloté par la première base de temps 10 et assure le découpage de la suite synchrone d'éléments binaires à transmettre en blocs successifs de six. Ce convertisseur série-parallèle 14, de conception classique, peut être formé d'un registre à décalage à six étages à entrées série de données et sorties parallèles de données suivi d'un autre registre à six étages à entrées et sorties parallèles de données. Le registre à

3

décalage a alors son entrée série de données connectée à une entrée 101 du terminal d'émission sur laquelle est appliquée la suite synchrone d'éléments binaires à transmettre et est cadencé par le signal d'horloge locale disponible à l'entrée 100 tandis que l'autre registre est placé en tampon aux sorties du premier et cadencé par un premier signal d'horloge du bloc engendré par la première base de temps 10 à partir d'une division de fréquence par six du signal horloge locale.

Les blocs successifs de six éléments binaires délivrés en parallèle par le convertisseur série parallèle 14 sont appliqués à une mémoire tampon 15 qui assure le changement de rythme nécessaire à l'introduction des mots de verrouillage de trame et des éléments binaires de voies de service. D'une capacité de quatre mots binaires à six chiffres, elle est adressée de manière cyclique en écriture par la première base de temps 10 à un rythme d'adressage régulier correspondant à celui des blocs délivrés par le convertisseur série-parallèle 14 et, en lecture, par la deuxième base de temps 11 à un rythme d'adressage irrégulier tiré d'une sélection des impulsions à la fréquence Baud de l'oscillateur 10 correspondant à des emplacements de bloc dans les trames.

Les blocs de six éléments binaires successifs lus dans la mémoire tampon 15 traversent ensuite un multiplexeur 16 permettant leur multiplexage temporel avec d'autre blocs moins fréquents de six éléments binaires constituant les bits de voies de service. Ce multiplexeur 16 à deux entrées et une sortie à six chiffres parallèles est commandé par la deuxième base de temps 11 de manière à adresser la mémoire tampon 15 en dehors des emplacements de voie de service dans la trame.

La suite de blocs de six éléments binaires successifs disponible en sortie du multiplexeur 16 est appliquée à un embrouilleur synchrone 17 initialisé à chaque début de trame par la deuxième base de temps 11, son début de séquence toujours identique et formé d'un nombre entier de blocs constituant un mot de verrouillage trame et s'insérant dans un intervalle de temps laissé libre dans la suite des blocs de données délivrés par le multiplexeur 16. Cet embrouilleur synchrone réalise un embrouillage des données à transmettre de manière à garantir l'indépendance de la voie de transmission à l'égard des séquences de bits et également de manière à rendre équiprobable en réception les diverses formes de superposition de symboles permises par la technique de codage à réponse partielle ce qui, comme on le verra ultérieurement, permet de limiter les éventuelles propagations d'erreurs de décryptage. Il ne sera pas détaillé ici car il est de conception classique et peut par exemple être conforme aux recommandations de l'avis G954 du CCITT.

La suite synchrone de blocs de six éléments binaires issue de l'embrouilleur 17 est dirigée vers un codeur 18 qui transforme chaque bloc en mot constitué de quatre éléments ternaires disponibles chacun sous forme d'éléments binaires à deux digits. Cette transformation s'effectue en appliquant une loi de codage par blocs dite 6B/4T connue pour engendrer un signal en ligne particulièrement bien adapté à une transmission par câble avec régénération complète aux répéteurs intermédiairesgrâce à un facteur de réduction du débit en ligne de l'ordre de 2/3, une absence de composantes spectrales continue et basses fréquences, une redondance suffisante pour la surveillance des erreurs et une bonne définition du rythme. Une loi de codage par blocs dite 6B/4T se définit par un tableau de correspondance faisant correspondre à toutes valeurs particulières d'un bloc de six éléments binaires une valeur particulière d'un mot de quatre éléments ternaires à somme numérique 0 ou ± 1 ou la version complémentée ou non d'un mot de quatre éléments ternaires à somme numérique ± 2 choisie de manière à ramener vers zéro la somme numérique courante du signal émis en ligne. Des exemples de tableaux de définition de telles lois de codage figurent dans la contribution n° 60 de la commission d'étude XVIII du CCITT période 1977-1980 et dans l'article de J. Valim intitulé "Codes d'impulsions pour transmission d'informations binaires" et paru dans la revue technique Thomson-C.C.F volume 11, n° 2, juin 1979.

La mise en oeuvre de cette loi de codage se fait, comme représenté, à l'aide de trois mémoires mortes programmables :
-une première mémoire morte programmable 181 qui est adressée par les blocs de six chiffres binaires issus de l'embrouilleur 17 et par un signal de polarité de la somme numérique courante provenant de la lecture d'une troisième mémoire morte programmable 183, et qui renferme le tableau de définition du code, les valeurs de chaque élément ternaire y étant inscrites sous la forme de deux chiffres binaires
-une deuxième mémoire morte programmable 182 ayant le même adressage que la première et renfermant sous forme binaire les valeurs de la somme numérique de chaque mot ternaire issu du codage
-et la troisième mémoire morte programmable 183 câblée en accumulateur, adressée à la fois par la deuxième mémoire morte 182 et par rebouclage, calculant la somme numérique courante et délivrant à l'adressage des deux autres mémoires mortes 181 et 182 un signal de polarité de cette somme servant au choix de la version complémentée ou non du mot ternaire lorsque ce choix se pose.

4

La suite des mots ternaires lus en binaires sur huit chiffres (deux par élément ternaire) dans la première mémoire morte 181 du codeur 18 est appliquée à un convertisseur parallèle-série 19 qui délivre en binaire sur deux chiffres la suite synchrone d'éléments ternaires résultant du codage. Ce convertisseur parallèle-série 19 peut être formé de deux registres à décalage à quatre étages à entrées parallèles de données et sortie série de données traitant chacun l'un des chiffres des éléments ternaires, tous les deux ayant leur commande de chargement parallèle recevant des impulsions à la fréquence mot de 23,485 Mhz dérivées du signal de l'oscillateur 12 à la fréquence Baud de 93,943 Mhz par l'intermédiaire d'un diviseur de fréquence par quatre 20 et leur commande d'horloge cadencée par le signal de l'oscillateur 12 à la fréquence Baud.

La suite synchrone d'éléments ternaires disponibles en binaire sur deux chiffres à la sortie du convertisseur parallèle-série 19 est enfin appliquée à un convertisseur numérique analogique 21 qui lui restitue ses trois nuveaux 0 ± 1, puis à un amplificateur d'émission 22 qui délivre sur sa sortie 103 le signal de ligne.

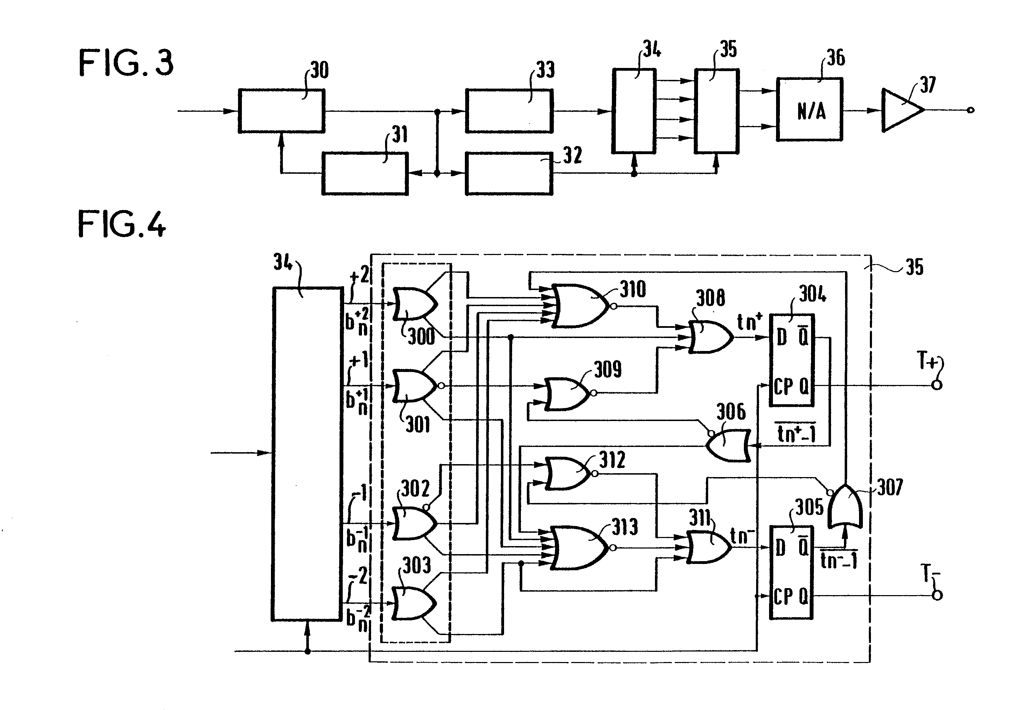

La figure 3 représente le synoptique d'un répéteur régénérateur assurant une régénération complète dusignal en ligne après son parcours dans le câble sur la longueur d'un pas de régénération. Ce répéteur régénérateur comporte en entrée un amplificateur égaliseur 30 qui compense la distorsion et l'affaiblissement $\sqrt{f}$ de la longueur de câble de manière à lui donner une réponse en fréquence plate en amplitude et linéaire en phase jusqu'à une fréquence voisine de la demi-fréquence Baud fn. De conception classique, il comporte une partie d'égalisation fixe avec des cellules passives de filtrage et un amplificateur apériodique qui compense la longueur minimale de 5,8 km du pas de régénération prévu pour le câble coaxial 2,6/9,5 utilisé et une partie d'égalisation variable à réseau de Bode qui est commandée au moyen d'un détecteur de crête 31 placé en sortie de l'amplificateur égaliseur 30 et qui compense automatiquement le supplément de longueur de câble existant dans les limites d'une longueur maximale de 6, 8 km pour le pas de régénération.

Le signal issu de l'amplificateur égaliseur 30 est appliqué à un circuit de récupération de rythme 32 récupérant la cadence Baud du signal émis en ligne et à un filtre de mise en forme traitant les interférences entre symboles de manière à les contrôler.

Le circuit de récupération de rythme 32 met à profit le fait que tout traitement non linéaire du signal en ligne fait apparaître dans son spectre une raie à la fréquence Baud. De conception classique, il opère par redressement du signal issu de l'amplificateur égaliseur 30 et filtrage du signal obtenu à l'aide d'un filtre à bande étroite par exemple à quartz, centré sur la fréquence Baud de 93,944 Mhz puis amplification de la raie isolée et ajustage de sa phase afin que ses transitions coïncident avec les milieux des symboles reçus.

Le filtre de mise en forme 33 n'est pas, contrairement à l'habitude dans ce genre de transmission, un filtre donnant à l'amplificateur égaliseur 30 et à la section de câble qui le relie à l'amplificateur d'émission situé immédiatement en amont par rapport au sens de la transmission une réponse en fréquence en forme de cosinus surélevé avec un facteur de coupure de l'ordre de 0,7 respectant le premier critère de Niquist pour supprimer les interférences entre les symboles reçus mais un filtre à réponse en cosinus du genre de ceux utilisés dans la technique de réponse partielle classe 1, n = 2 connus par exemple par le brevet américain n° 3.388.330 précité. Il donne à l'amplificateur égaliseur 30 et à la section de câble qui le précéde une réponse en fréquence de la forme :

$$h\,(f) = \cos \frac{\pi f}{2\,fn}$$

fn étant la demi-fréquence Baud. Par rapport au filtre en cosinus surélevé habituel avec facteur de retombée ou "roll-of" de 0,7, il permet une limitation effective de la bande de fréquence à la demi-fréquence Baud fnsans avoir à dépasser cette demi-fréquence d'un facteur de 0,7 avec une retombée progressive faisant en sorte que la somme des amplitudes en deux points de fréquences symétriques par rapport à la demi-fréquence Baud reste constante. Cela permet de limiter la bande de bruit avec toutefois la contrepartie de provoquer une superposition linéaire contrôlée de deux symboles successifs conduisant dans le cas de symboles ternaires à la réception d'un signal à cinq niveaux et par conséquent à une diminution de 2,1 dB du rapport signal bruit. Les avantages ne semblant pas l'emporter sur les inconvénients, ce mode de mise en forme n'a pas été mis en oeuvre dans les liaisons de transmission par câble avec répéteurs intermédiaires. Pourtant, l'expérimentation a montré qu'il apportait une amélioration surprenante du rapport signal à bruit, la réduction du bruit thermique due à la limitation de la bande passante compensant très largement la perte de sensibilité due au passage en réception d'un signal de trois à cinq niveaux et se traduisant dans l'exemple décrit par un gain dans le rapport signal à bruit de l'ordre de 20 dB permettant un allongement du pas nominal de régénération de 4,5 à 6,3 km.

Le signal délivré par le filtre de mise en forme 33 est appliqué à un détecteur de niveau 34 piloté par le circuit de récupération de rythme 32 et décrypté par un circuit logique 35 de décryptage de superposition qui restitue les symboles ternaires émis à l'origine sous une forme binaire à deux chiffres.

Le détecteur de niveau 34 est formé d'une batterie de quatre comparateurs à seuils qui sont placés en parallèle et dont les seuils de basculement sont équitablement répartis entre les cinq niveaux que peut prendre le signal en sortie du filtre de mise en forme, et de registres tampon échantillonnant les sorties des comparateurs à seuils au milieu des symboles reçus c'est-à-dire du diagramme de l'oeil, sous la commande du circuit de récupération de rythme Baud 32.

Comme on peut le voir sur la figure 4, le détecteur de niveau 34 présente quatre sorties binaires correspondant chacune à la sortie échantillonnée de l'un des comparateurs :

-la sortie + 2 qui correspond à celle du comparateur ayant son seuil compris entre les niveaux + 1 et + 2 du signal de sortie du filtre de mise en forme 34 et sur laquelle est disponible, à la suite de l'échantillonnage en cours de détection d'un symbole Sn reçu, un signal $b_n^{+2}$ de niveau logique 1 ou 0 selon que le signal de sortie du filtre de mise en forme 34 était ou non supérieur au seuil du comparateur au moment de l'échantillonnage,

-la sortie + 1 qui correspond à celle du comparateur ayant son seuil compris entre les niveaux 0 et + 1 du signal de sortie du filtre de mise en forme 34 sur laquelle est disponible, à la suite de l'échantillonage en cours de détection d'un symbole Sn reçu, un signal $b_n^{+1}$ d'un niveau logique 1 ou 0 selon le signal de sortie du filtre de mise en forme 34 était ou non supérieur au seuil du comparateur au moment de l'échantillonnage,

-la sortie - 1 qui correspond à celle du comparateur ayant son seuil compris entre les niveaux 0 et -1 du signal de sortie du filtre de mise en forme 34 et sur laquelle est disponible, à la suite de l'échantillonnage en cours de détection d'un symbole reçu Sn, un signal $b_n^{-1}$ d'un niveau logique 0 ou 1 selon que le signal de sortie du filtre de mise en forme 34 était ou non supérieur au seuil du comparateur au moment de l'échantillonnage, ce comparateur ayant un signal de sortie complémenté par rapport à ceux des deux comparateurs précédents

-et la sortie -2, qui corresond à celle du comparateur ayant un seuil compris entre les niveaux -1 et -2 du signal de sortie du filtre de mise en forme 34 et sur laquelle est disponible, à la suite de l'échantillonnage en cours de détection d'un symbole Sn reçu, un signal $b_n^{-2}$ d'un niveau logique 0 ou 1 selon que le signal de sortie du filtre de mise en forme 34 était ou non supérieur au seuil du comparateur au moment de l'échantillonnage, ce comparateur ayant, comme le précédent, un signal de sortie complémenté par rapport à ceux des deux premiers.

Le circuit logique de décryptage de superposition 35 identifie le symbole ternaire émis soit directement lorsque la superposition engendre les niveaux extrêmes ± 2 qui ne peuvent résulter que de la superposition de deux symboles ternaires, de valeur +1 ou respectivement -1 émis successivement, soit indirectement en prenant en compte le symbole précédemment décrypté lorsque la superposition engendre un niveau intermédiaire 0 ou ± 1. Pour ce faire, il procède en logique binaire en codant tout symbole ternaire sur deux chiffres binaires disponibles sur des sorties binaires T +, T-qui ne passent jamais simultanément au niveau logique 1, un niveau logique 1 sur la sortie T + correspondant à un symbole ternaire de valeur + 1, un niveau logique 1 sur la sortie T-correspondant à un symbole ternaire de valeur -1 et un niveau logique 0 simultanément sur les deux sorties T +, T-correspondant à un symbole ternaire de valeur 0.

Il comporte, comme représenté à la figure 4, une batterie de quatre amplificateurs 300, 301, 302, 303 à sorties inverseuses et non inverseuses distribuant des versions complémentées et non complémentées des signaux binaires $b_n^{+2}$ , $b_n^{+1}$ , $b_n^{-1}$ , $b_n^{-2}$ , délivrés par le détecteur de niveau 34 à chaque symbole ternaire reçu Sn et deux bascules de type D 304 respectivement 305 mémorisant les composantes $t_n^{+}$ -1 respectivement $t_n^{-}$ -1 du symbole ternaire Sn-1 précédemment reçu et décrypté ainsi que deux amplificateurs 306, 307 à sorties inverseuses et non inverseuses qui sont connectés en entrée aux sorties $\overline{Q}$ des bascules de type D 304 et 305 et fournissent les versions complémentées et non complémentées des composantes $t_n^{+}$ -1 et $t_n^{-}$ -1.

Les bascules de type D 304, 305 mémorisant les composantes $t^{+}$ et $t^{-}$ du symbole ternaire reçu reçoivent les valeurs desdites composantes sur leurs entrées de données D, sont inscrites sous la commande du circuit de récupération du rythme 32 et ont leurs sorties Q connectées aux sorties T + et T-du circuit logique de décryptage.

La composante $t_n^{+}$ dont le niveau logique 1 caractérise un symbole ternaire reçu et décrypté Sn de valeur + 1 provient d'une porte logique de type "ou" 308 à trois entrées réglant les différents cas de superpositions linéaires pouvant résulter de l'émission d'un symbole ternaire Sn de valeur + 1.

Une première entrée de la porte logique de type "ou" 308 est directement reliée en sortie de l'amplificateur 300. Elle permet d'appliquer le signal $b\overset{+}{n}^2$ lorsqu'il est au niveau logique 1 comme signal $t\overset{+}{n}$ car un niveau de superposition +2 en réception ne peut avoir été provoqué que par l'émission de deux symboles ternaires successifs de valeur +1.

Une deuxième entrée de la porte logique de type "ou" 308 est reliée aux sorties inverseuses des amplificateurs 301 et 306 par l'intermédiaire d'une porte logique de type "non ou" 309 à deux entrées. Elle permet d'imposer au signal $t\overset{+}{n}$ un niveau logique 1 provenant du signal $b\overset{+}{n}^1$ lorsque le signal $t\overset{+}{n}$ -1 est au niveau 0 car un niveau de superposition égal ou supérieur à +1 en réception ne peut avoir été provoqué que par l'émission d'un symbole ternaire Sn de valeur +1 dans le cas où le symbole ternaire précédemment décrypté Sn-1 n'était pas de valeur +1 ($t\overset{+}{n}$ -1 au niveau logique 0).

Une troisième entrée de la porte logique de type "ou" 308 est reliée aux sorties non inverseuses des amplificateurs 300, 301, 302, 303 et 307 par l'intermédiaire d'une porte logique de type "non ou" 310 à cinq entrées. Elle permet d'imposer au signal $t\overset{+}{n}$ un niveau logique 1 provenant du signal $t\overset{+}{n}$ -1 lorsque l'ensemble des signaux bn sont au niveau logique 0 traduisant en réception un niveau de superposition 0 car un niveau de superposition 0 ne peut avoir été provoqué que par l'émission d'un symbole ternaire Sn de valeur +1 dans le cas où le symbole ternaire précédemment décrypté Sn-1 était de valeur -1 ($t\overset{-}{n}$ -1 au niveau logique 1).

L'ensemble de ces cas est résumé par l'équation logique de définition de la composante $t\overset{+}{n}$ :

$$t\overset{+}{n} = b\overset{+}{n}^2 + b\overset{+}{n}^1 \cdot t\overset{+}{n}\text{-}1 + b\overset{+}{n}^2 \cdot b\overset{+}{n}^1 \cdot b\overline{n}^1 \cdot b\overline{n}^2 \cdot t\overline{n}\text{-}1$$

La composante $t\overline{n}$ dont le niveau logique 1 caractérise un symbole ternaire décrypté de valeur -1 est obtenue de manière très semblable à la composante $t\overset{+}{n}$. Elle provient d'une porte logique de type "ou" 311 à trois entrées réglant les différents cas de superposition linéaire pouvant résulter de l'émission d'un symbole ternaire Sn de valeur -1.

Une première entrée de la porte logique "ou" 311 est directement reliée en sortie de l'amplificateur 303. Elle permet d'appliquer le signal $b\overline{n}^2$ lorsqu'il est au niveau logique 1 comme signal $t\overline{n}$ car un niveau de superposition de -2 en réception n'a pu être provoqué que par l'émission de deux symboles ternaires successifs de valeur -1.

Une deuxième entrée de la porte logique de type "ou" 311 est reliée aux sorties inverseuses des amplificateurs 302 et 307 par l'intermédiaire d'une porte de type "non ou" 312 à deux entrées. Elle permet d'imposer au signal $t\overline{n}$ un niveau logique 1 provenant du signal $b\overline{n}^1$ lorsque le signal $t\overline{n}$ -1 est au niveau logique 0 car un niveau de superposition égal ou inférieur à -1 en réception ne peut avoir été provoqué que par l'émission d'un symbole ternaire Sn de valeur -1 dans le cas où le symbole ternaire précédemment décrypté Sn-1 n'était pas de valeur - 1.

Une troisième entrée de la porte logique de type "ou" 311 est reliée aux sorties non inverseuses des amplificateurs 300, 301, 302, 303 et 306 par l'intermédiaire d'une porte logique de type "non ou" 313 à cinq entrées. Elle permet d'imposer au signal $t\overline{n}$ un niveau logique 1 provenant du signal $t\overline{n}$ -1 lorsque l'ensemble des signaux bn sont au niveau logique 0 traduisant en réception un niveau de superposition égal à 0 car un tel niveau de superposition ne peut avoir été provoqué que par l'émission d'un symbole ternaire de valeur -1 dans le cas où le symbole ternaire précédem ment décrypté Sn-1 était de valeur +1 ($t\overset{+}{n}$ -1 au niveau logique 1).

L'ensemble de ces cas se résume par l'équation logique de définition de la composante $t\overline{n}$ :

$$t\overline{n} = b\overline{n}^2 + b\overline{n}^1 \cdot t\overline{n}\text{-}1 + b\overset{+}{n}^2 \cdot b\overset{+}{n}^1 \cdot b\overline{n}^1 \cdot b\overline{n}^2 \cdot t\overset{+}{n}\text{-}1$$

Ce mode de décryptage limite la propagation d'erreur. Celle-ci est en effet inexistante pour les deux niveaux de superposition extrêmes ± 2. De plus, il y a mise en oeuvre d'une correction dans le cas erroné où le niveau de superposition est +1, respectivement -1, alors que le symbole ternaire précédent a été décrypté de valeur -1, respectivement +1.

On remarque en outre que le circuit de décryptage obtenu est très rapide, les signaux ayant au plus à franchir trois couches de portes logiques.

Les composantes $t_n^+$ et $t_n^-$ des symboles ternaires fournies en parallèle par le circuit logique de décryptage 35 qui vient d'être décrit sont appliquées à un convertisseur numérique-analogique 36 qui redonne aux symboles leur forme ternaire initiale et qui peut être constitué par exemple d'un amplificateur différentiel recevant la composante $t_n^+$ sur son entrée non inverseuse et la composante $t_n^-$ sur son entrée inverseuse, et de là, à l'amplificateur de ligne 37 qui lui donne la puissance requise pour son application au câble de transmission.

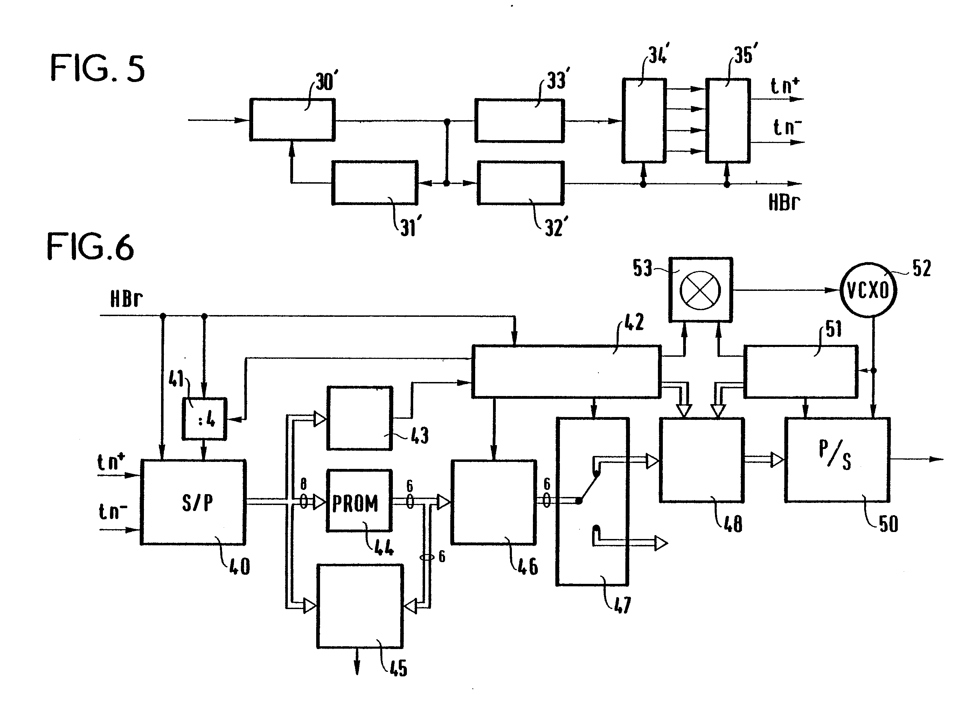

Le signal en ligne complètement régénéré à chaque répéteur-régénérateur parvient, en fin de liaison, au terminal de réception dont le synoptique est représenté à la figure 5 en ce qui concerne les équipements d'entrée régénérant les symboles ternaires et à la figure 6 en ce qui concerne les équipements extrayant des symboles ternaires régénérés la suite des données binaires transmises depuis le terminal d'émission.

Les équipements d'entrée du terminal de réception représentés à la figure 5 sont identiques à ceux d'un répéteur-régénérateur et indexés par les mêmes chiffres de référence affectés d'un prime. Le signal d'entrée, en provenance du câble, est soumis à un amplificateur égaliseur 30' s'ajustant automatiquement à la longueur de la section de câble amont sous la commande d'un détecteur de crête 31' connecté à sa sortie, puis simultanément à un circuit de récupération de rythme Baud 32' délivrant un signal d'horloge Baud récupéré HB$_r$ et à un filtre de mise en forme à réponse en cosinus 33' alimentant un circuit de détection de niveau 34' et un circuit logique de décryptage de superposition 35' cadencés par le circuit de récupération de rythme 32'.

Comme représenté à la figure 6, les deux composantes binaires $t_n^+$ et $t_n^-$ des symboles fournies par le circuit logique de décryptage 35' ainsi que le signal d'horloge Baud HB$_r$ sont appliqués à un convertisseur série-parallèle 40 récupérant le découpage de la suite de symboles en mots de quatre éléments résultant du codage 6B 4T effectué à l'émission. Ce convertisseur série-parallèle présente deux parties identiques, une par composante $t_n^+$, $t_n^-$ de symboles, formées chacune d'un registre à décalage à entrée série de données et sorties parallèles de données suivi d'un registre à entrées et sorties parallèles de données placé en tampon. Les deux registres ont un nombre d'étages supérieur ou égal à quatre et au nombre de symboles d'un mot de verrouillage trame. Ils sont cadencés par le signal d'horloge Baud récupéré HB$_r$, le premier directement et le second par l'intermédiaire d'un diviseur par quatre 41 pourvu d'une commande de déphasage commandée par une première base de temps 42 pilotée par le signal d'horloge Baud récupéré HB$_r$.

Le ou les mots successifs de quatre symboles ternaires délivrés en parallèles, chacun sur huit chiffres binaires, par le convertisseur série-parallèle 40 sont appliqués à un circuit de reconnaissance de mots de verrouillage trame 43, à un décodeur 44 de type 6B4T et à un circuit de détection d'erreur 45.

Le circuit de reconnaissance de mots de verrouillage trame 43, qui peut être un simple comparateur d'identité, engendre une impulsion d'identification à destination de la première base de temps 42 chaque fois qu'il reconnaît la configuration d'un mot de verrouillage trame en sortie du convertisseur série-parallèle.

La première base de temps 42 engendre par division et sélection de cycle du signal de rythme récupéré HB$_r$ des impulsions de rythme de mots de verrouillage trame, compare leurs instants d'apparition avec ceux des impulsions d'identification engendrées par le circuit de reconnaissance de mots de verrouillage trame 43 et procède à des sauts de cycle correspondant à une période mot jusqu'à obtenir leur simultanéité. En cas d'échec elle envoie un ordre de déphasage au diviseur de fréquence par quatre 41 pour corriger le découpage par mots.

Le décodeur 44 de type 6B4T est une mémoire morte programmable adressée par les signaux de sortie des quatre premiers étages du convertisseur série-parallèle 40 et qui renferme le tableau de définition du code et délivre en sortie des blocs binaires de six chiffres.

Le circuit de détection d'erreurs 45 est un codeur 6B/4T analogue à celui du terminal d'émission qui recode le bloc binaire issu du décodeur 44 et le compare au mot codé appliqué à l'entrée du décodeur 44 pour engendrer un signal d'erreur en cas de non coïncidence.

Les blocs binaires à six chiffres issus du décodeur 44 sont ensuite appliqués à un désembrouilleur synchrone 46 qui correspond à l'embrouilleur synchrone du terminal d'émission et qui est initialisé par des impulsions périodiques marquant les débuts de trame délivrées par la première base de temps 42.

La suite de blocs binaires à six chiffres délivrés par le désembrouilleur synchrone 46 est dirigée vers un démultiplexeur 47 qui permet l'extraction des blocs de voie de service puis vers une mémoire tampon 48 qui permet le démultiplexage temporel des blocs correspondant aux données acheminées et à un convertisseur parallèle série 50 restituant les données sous leur forme initiale de suite synchrone d'éléments binaires 140 Mbit/s.

Le démultiplexeur 47 présente une entrée à six chiffres parallèles et deux sorties à six chiffres parallèles dont l'une constitue la sortie des blocs de voie de service. Il est adressé par la première base de temps 42 de manière à diriger les blocs binaires délivrés par le désembrouilleur 46 vers la mémoire tampon 48 en dehors des emplacements de voie de service dans la trame.

La mémoire tampon 48 joue un rôle réciproque de celui de la mémoire tampon 15 du terminal d'émission. Elle assure le changement de rythme nécessaire au rétablissement du synchronisme après extraction des blocs de voie de service et de mot de verrouillage trame. D'une capacité de quatre mots binaires à six digits, elle est addressée de manière cyclique en écriture par la première base de temps 42 à un rythme d'adressage irrégulier correspondant aux emplacements dans la trame des blocs correspondant à des données et, en lecture, par une deuxième base de temps 51 à un rythme d'adressage régulier au sixième du débit binaire de 140 Mbit/s.

Cette deuxième base de temps 51 est pilotée par un oscillateur VCXO à commande en tension 52 délivrant un signal d'horloge bit à 140 Mbit/s maintenu dans un rapport de fréquence constant avec le signal d'horloge Baud récupéré $HB_r$ grâce à une boucle d'asservissement incluant un comparateur de phase 53 recevant deux signaux de même fréquence, l'un qui est un sous harmonique du signal d'horloge Baud récupéré $HB_r$ et qui est engendré par la première base de temps 42 et l'autre qui est un sous harmonique du signal d'horloge bit et qui est engendré par la deuxième base de temps 51.

Le convertisseur parallèle série 50 en sortie du terminal de réception est constitué d'un registre à décalage à six étages à entrées parallèles de données et sortie série de données chargéen parallèle à la fréquence bloc délivrée par la deuxième base de temps 51 grâce à une division par six de la fréquence de l'oscillateur VCXO 52 et déchargé en série à la fréquence bit délivrée directement par l'oscillateur VCXO 52.

On peut, sans sortir du cadre de l'invention modifier certaines dispositions ou remplacer certains moyens par des moyens équivalents.

## Revendications

Système de transmission numérique synchrone sur câble (3) avec un terminal d'émission (1), des répéteurs régénérateurs intermédiaires (4, 5 et 6) et un terminal de réception (2), caractérisé en ce que le terminal d'émission comporte un embrouilleur de données (17) et un codeur en ligne binaire-ternaire (18) de type 6B 4T et en ce que les répéteurs régénérateurs intermédiaires (4, 5 et 6) ainsi que le terminal de réception comportent en réception des moyens de filtrage de mise en forme (33, 33') conformes à ceux du codage à réponse partielle classe 1 type n = 2 et des moyens logiques (34, 34') de décryptage des superpositions binaires de symboles résultant d'un tel filtrage de mise en forme, le terminal de réception (2) étant en outre pourvu d'un décodeur binaire ternaire de type 6B 4T et d'un désembrouilleur (46) compatibles avec le codeur (18) et l'embrouilleur (17) du terminal d'émission (1).

0 255 046

# FIG.1

# FIG.2

FIG.3

FIG.4

0 255 046

FIG. 5

FIG.6

0 255 046

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl 4) |
|---|---|---|---|
| Y | IEEE TRANSACTIONS ON COMMUNICATIONS, vol. COM-28, no. 8, août 1980, pages 1425-1430, IEEE, New York, US; T. ROSTE et al.: "A 140 Mbit/s digital transmission system for coaxial cable using partial response class 1 line code with quantized feedback" * Page 1425, colonne de droite, lignes 20-47; page 1426, colonne de droite, lignes 28-36; page 1427, colonne de gauche, lignes 25-26 * | 1 | H 04 L 25/49 |
| | --- | | |
| Y,D | US-A-3 492 578 (GERRISH) * Colonne 2, lignes 22-38; revendication 1 * | 1 | |
| | --- | | DOMAINES TECHNIQUES RECHERCHES (Int Cl.4) |
| A | DE-A-3 312 400 (SIEMENS) * Page 7, lignes 24-28 * | 1 | H 04 L |
| | ----- | | |

Le présent rapport de recherche a été établi pour toutes les revendications

| Lieu de la recherche | Date d'achèvement de la recherche | Examinateur |
|---|---|---|
| LA HAYE | 22-10-1987 | VEAUX,C.J. |